# EUROPÄISCHE PATENTANMELDUNG

(11) **EP 1 477 817 A1**
(43) Veröffentlichungstag der Anmeldung: **17.11.2004**
(21) Anmeldenummer: 04090178.7
(22) Anmeldetag: 06.05.2004
(51) Int. Cl.: G01P 1/02, G01D 11/24

(54) **Drehgeber**

(30) Priorität: 14.05.2003 DE 10322173
(71) Anmelder: Hübner Elektromaschinen AG, 10967 Berlin (DE)
(72) Erfinder: Kai-Hans, Otto, 12526 Berlin (DE)
(74) Vertreter: Grünecker, Kinkeldey, Stockmair & Schwanhäusser

(57) **Zusammenfassung**

Bei einem Drehgeber mit einer aus einem Unterteil (3) und einem Oberteil (4) bestehenden Klemmendose dienen zum Verbinden von in das Oberteil (4) eingeführten elektrischen Leitern (12) mit dem Unterteil ein am Oberteil gegenüber dessen Zentrum versetzter Stiftstecker und zwei am Unterteil befestigte Buchsenstecker (14, 15), die sich diametral gegenüberliegen und ebenfalls jeweils um den gleichen Betrag wie der Stiftstecker des Oberteiles (4) zu dessen Zentrum versetzt sind, so dass der Stiftstecker je nach Lage des Gehäuses des Drehgebers in einen der beiden Buchsenstecker (14, 15) steckbar ist.

## Beschreibung

Die Erfindung betrifft einen Drehgeber zum Erfassen von Positionen und/oder Drehzahlen von Wellen mit einem einen Befestigungsflansch aufweisenden Gehäuse, das mit einer Klemmendose versehen ist, die ein mit dem Gehäuse ein Stück bildendes, rahmenförmiges Unterteil und ein Oberteil aufweist, wobei das Oberteil von einem mit dem Unterteil verschraubbaren Deckel gebildet wird, der mit einer Aufnahme für eine Klemmenleiste und einem gegenüber seinem Zentrum versetzten Buchsenstecker sowie einem Kabeleinlass versehen ist, und wobei im Unterteil ein um den gleichen Betrag gegenüber dem Zentrum des Oberteils versetzter Stiftstecker angeordnet ist.

Bekannt sind Drehgeber der in Betracht gezogenen Art, bei denen im einen Deckel bildenden Oberteil der Klemmendose eine von außen zugängliche Klemmleiste und ein einzelner gegenüber dem Zentrum der Klemmdose nach außen versetzter Buchsenstecker angeordnet sind. Dem Buchsenstecker ist ein einzelner ebenfalls gegenüber dem Zentrum der Klemmendose versetzter Stiftstecker zugeordnet. Die Verwendung jeweils nur eines Buchsensteckers und eines Stiftsteckers bringt es mit sich, dass das Unterteil der Klemmendose und ihr Oberteil in nur einer einzigen Position miteinander verbindbar sind.

In der Praxis ist es nun so, dass bei der Anbringung eines Drehgebers an einer Maschine zunächst der Drehgeber mit der Maschine verbunden, danach der Buchsenstecker des Deckels auf den Stiftstecker des Unterteils gesteckt und schließlich der Deckel mit dem Unterteil der Klemmendose verschraubt wird. Gegen diese Vorgehensweise bestehen dann keine Einwände, wenn der Monteur bei der Anbringung des Drehgebers an der Maschine darauf achtet, dass der Drehgeber eine Position einnimmt, in der nach dem Zusammenfügen von Buchsenstecker und Stiftstecker der Kabeleinlass des Deckels der Klemmendose nach unten gerichtet ist. Wie die Erfahrung gezeigt hat, kommt es wider Erwarten häufig vor, dass der Drehgeber in einer gegenüber seiner Sollposition um 180° verdrehten Lage montiert wird. Dies aber führt dazu, dass der Kabeleinlass nach der Anbringung des Deckels nicht - wie vorgeschrieben nach unten - sondern nach oben gerichtet ist. Die unerwünschte Position des Kabeleinlasses der Klemmendose bringt vor allem dann Probleme mit sich, wenn der Drehgeber an Maschinen im Außenbereich oder z. B. auch an im Innenbereich installierten Werkzeugmaschinen angebracht wird, bei welchen mit mehr oder weniger starken Kühl-Schmiermittel-Nebeln gerechnet werden muss. Die über den nach oben gerichteten Kabeleinlass in die Klemmendose eindringende Feuchtigkeit kann in derartigen Fällen nicht nur zu Fehlmessungen, sondern sogar zu Schäden am Drehgeber führen.

Der Erfindung liegt die Aufgabe zugrunde, der aufgezeigten Problematik dadurch Herr zu werden, dass auch bei falsch montiertem Drehgeber der Deckel der Klemmendose problemlos so montiert werden kann, dass der Kabeleinlass nach unten gerichtet ist. Gelöst wird diese Aufgabe erfindungsgemäß dadurch, dass das Unterteil der Klemmendose mit mindestens einem zweiten Stiftstecker ausgestattet ist, der dem ersten Stiftstecker diametral gegenüberliegt.

Der erfindungsgemäße Drehgeber bietet den Vorteil, dass der Deckel der Klemmendose in zwei um 180° zueinander versetzten Positionen so mit dem Unterteil der Klemmendose verbunden werden kann, dass ihr Kabeleinlass nach unten gerichtet ist.

Weitere Merkmale und Einzelheiten der Erfindung ergeben sich aus den Unteransprüchen und der nachstehenden Beschreibung einer in den beigefügten Zeichnungen dargestellten Ausführungsform der Erfindung.

Es zeigen:
- Fig. 1: einen Drehgeber mit montierter Klemmendose,
- Fig. 2: die wesentlichen Teile der Klemmendose des Drehgebers gemäß Fig. 1 vor der Montage und
- Fig. 3: die in Fig. 2 dargestellten wesentlichen Teile der Klemmendose aus einer zweiten Richtung betrachtet.

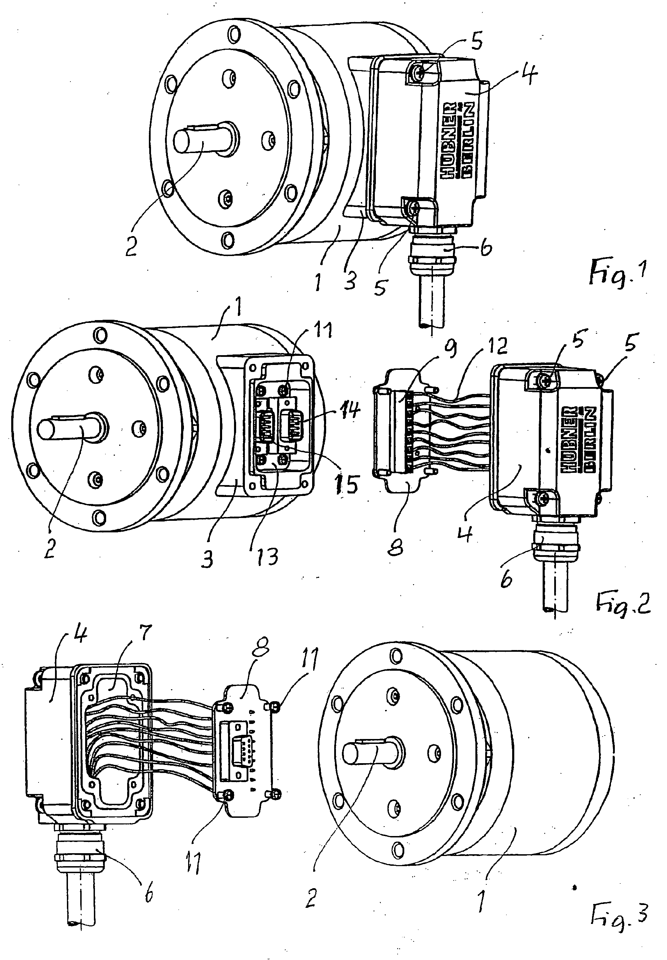

In Figur 1 bis 3 ist 1 das Gehäuse eines eine Welle 2 aufweisenden Drehgebers. Das Gehäuse 1 ist mit dem integralen Unterteil 3 einer kastenförmigen Klemmendose versehen, deren Oberteil 4 als ein mit dem Unterteil 3 durch Schrauben 5 verbindbarer Deckel ausgebildet ist. Das Oberteil 4 ist mit einem von einer Klemmverschraubung gebildeten Kabeleinlass 6 versehen, der in Fig. 1 ordnungsgemäß nach unten gerichtet ist. Das Oberteil 4 weist einen Hohlraum 7 auf, der durch eine Platine 8 verschließbar ist, die an ihrer dem Hohlraum 7 zugewandten Seite eine Klemmenleiste 9 und an ihrer dem Unterteil 3 zugewandten Seite einen gegenüber der Klemmenleiste 9 seitlich versetzten Buchsenstecker 10 trägt, dessen Kontakte mit den Klemmen der Klemmenleiste 9 verbunden sind. Zum Verbinden der Platine 8 mit dem Oberteil 4 dienen Schrauben 11. Diverse Leiter 12 sind mit der Klemmenleiste 9 verbunden.

Die für die Einführung diverser den Leitern 12 zugeordneter Leiter in das Innere des Gehäuses 1 des Drehgebers erforderliche Öffnung des Gehäuses 1 im Bereich des Unterteiles 3 ist mit Hilfe von Schrauben 11 durch eine weitere Platine 13 verschlossen, die an ihrer Außenseite zwei Stiftstecker 14 und 15 trägt. Die Stiftstecker 14 und 15 liegen sich diametral gegenüber und sind gegenüber dem Zentrum des Unterteiles seitlich um den Betrag nach außen versetzt, der dem Versatz des Buchsensteckers 10 gegenüber dem Zentrum des Oberteiles 4 bzw. der Platine 8 entspricht.

Bei der in den Figuren 1 und 2 dargestellten Lage des Drehgebers tritt bei der Montage des Oberteiles 4 der Buchsenstecker 10 mit Stiftstecker 14 in Eingriff. Nimmt der Drehgeber hingegen die um 180° geschwenkte Position gemäß Fig. 3 ein, so werden der Buchsenstecker 10 und der Stiftstecker 15 miteinander verbunden.

In der Praxis ist die Platine 13 bereits vor der Auslieferung des Drehgebers mit dem Unterteil 3 verschraubt, so dass trotz geöffneter Klemmendose keine Stäube oder Flüssigkeiten in das Innere des Gehäuses 2 eindringen können. Vor Ort wird das Ende des Kabels 16 in den Kabeleinlass 6 geführt und aufgespleißt, so dass seine Leiter 12 an die Klemmenleiste 9 angeschlossen werden können. Nach erfolgtem Anschluss der Leiter 12 an die Klemmenleiste 9 wird die Platine 8 mit dem Oberteil 4 verschraubt.

## Patentansprüche

1. Drehgeber zum Erfassen von Positionen und/oder Drehzahlen von Wellen mit einem einen Befestigungsflansch aufweisenden Gehäuse, das mit einer Klemmendose versehen ist, die ein mit dem Gehäuse ein Stück bildendes, rahmenförmiges Unterteil und ein Oberteil aufweist, wobei das Oberteil von einem mit dem Unterteil verschraubbaren Deckel gebildet wird, der mit einer Aufnahme für eine Klemmenleiste und einem gegenüber seinem Zentrum versetzten Buchsenstecker sowie einem Kabeleinlass versehen ist, und wobei im Unterteil ein um den gleichen Betrag gegenüber dem Zentrum des Oberteils versetzter Stiftstecker angeordnet ist, **dadurch gekennzeichnet, dass** das Unterteil (3) der Klemmendose mit mindestens einem zweiten Stiftstecker (15) ausgestattet ist, der dem ersten Stiftstecker (14) diametral gegenüberliegt.

2. Drehgeber nach Anspruch 1, **dadurch gekennzeichnet, dass** der Buchsenstecker (10) auf einer Platine (8) angeordnet ist, die auf ihrer dem Buchsenstecker (10) abgewandten Rückseite die Klemmenleiste (9) trägt.

3. Drehgeber nach Anspruch 2, **dadurch gekennzeichnet, dass** die den Buchsenstecker (10) tragende Platine (8) eine mit dem Oberteil (4) durch Schrauben (5) verbindbare Abdichtplatte für den dem Unterteil (3) zugewandten Hohlraum (7) des Oberteiles (4) bildet.

4. Drehgeber nach einem der Ansprüche 1 bis 3, **dadurch gekennzeichnet, dass** die Stiftstecker (14, 15) auf einer Platine (13) angeordnet sind, die eine Abdichtung für eine auf der den Stiftsteckern (14, 15) gegenüberliegenden Rückseite der Platine (13) gelegene Öffnung des Gehäuses (1) des Drehgebers bildet.

5. Drehgeber nach Anspruch 4, **dadurch gekennzeichnet, dass** die die Stiftstecker (14, 15) tragende Platine (13) durch Schrauben (11) mit dem Unterteil (3) verbunden ist.
